# EUROPÄISCHE PATENTSCHRIFT

(11) **EP 1 395 091 B1**
(45) Veröffentlichungstag und Bekanntmachung des Hinweises auf die Patenterteilung: **02.08.2006**
(21) Anmeldenummer: 03102435.9
(22) Anmeldetag: 06.08.2003
(51) Int. Cl.: H05B 33/08

(54) **Leuchte mit einer Schaltungsanordnung zum Ansteuern von Leuchtdioden und Verfahren zum Abgleichen einer solchen Schaltungsanordnung**
Lamp with a switching arrangement for controlling light-emitting diodes and method for adjusting such an arrangement
Lampe avec un circuit servant à commander des diodes electroluminescentes et procédé de reglage d'un tel circuit

(30) Priorität: 12.08.2002 DE 10236870
(43) Veröffentlichungstag der Anmeldung: 03.03.2004
(73) Patentinhaber: Hella KGaA Hueck & Co., 59552 Lippstadt (DE)
(72) Erfinder: Studniorz, Josef, 59329, Wadersloh (DE); Schröder, Stephan, 59557, Lippstadt (DE); Hinderlich, Andreas, 58739, Wickede (Ruhr) (DE)

(56) Entgegenhaltungen:
- WO-A-01/52605
- US-A- 4 900 912
- US-A- 5 019 769
- US-A1- 2002 105 287

## Beschreibung

Die Erfindung betrifft eine Leuchte mit einer Schaltungsanordnung zum Ansteuern von Leuchtdioden mit einem elektrischen Strom, wobei die Schaltungsanordnung Mittel zum Regeln des Stroms und Mittel zum Speichern eines Sollwerts des Stroms aufweist. Die Erfindung betrifft ferner ein Verfahren zum Abgleichen einer solchen Schaltungsanordnung.

Die Verwendung von Leuchtdioden als Leuchtmittel in Leuchten ist seit einiger Zeit bekannt. Insbesondere ist dabei bekannt, Leuchtdioden in Vektoren oder Matrizen anzuordnen und gemeinsam zu betreiben. Die Leuchtdioden werden dabei zu Leuchtdiodenvektoren zusammengestellt, in denen die Leuchtdioden des Vektors elektrisch in Serie geschaltet sind. Mehrere derartige Vektoren werden zu Leuchtdiodenmatrizen zusammengestellt, wobei die Leuchtdiodenvektoren meistens elektrisch parallel geschaltet sind.

Ein Problem bei der Verwendung von Leuchtdioden als Leuchtmittel für Leuchten liegt darin, dass Leuchtdioden - auch wenn sie von demselben Typ sind - oftmals hinsichtlich der Lichtausbeute eine starke Streuung aufweisen. Dies hat zur Folge, dass bei ein und dem selben elektrischen Strom der Lichtstrom bei Leuchtdioden desselben Typs sehr unterschiedlich sein kann. Der unterschiedliche Lichtstrom (gemessen in Lumen) kann sich dabei um den Faktor 3 unterscheiden. Die Leuchtdiodenhersteller liefern aus diesem Grunde die Leuchtdioden nach Lichtklassen sortiert. Innerhalb einer solchen Lichtklasse können jedoch immer noch starke Schwankungen zwischen den Eigenschaften der Leuchtdioden auftreten. Diese unterschiedlichen Eigenschaften führen dazu, dass die Leuchtdioden einer Lichtklasse nicht ohne weiteres verwendet werden können.

Werden beispielsweise die Leuchtdioden einer Lichtklasse zu einem Leuchtdiodenvektor oder zu einer Leuchtdiodenmatrix verbaut, kann es je nach Ausprägung der zufällig verbauten Leuchtdioden zu breiten Streuungen des mittels der Leuchtdiodenvektoren bzw. Matrizen erzeugten Lichtstroms kommen. Diese breite Streuung entsteht dadurch, dass sich die einzelnen Toleranzen der Leuchtdioden addieren und somit zu einer insgesamt größeren Streuung führen. Diese durchaus erheblichen Streuungen können für bestimmte Anwendungen, wo zum Beispiel gesetzlich Mindest- und/oder Maximalwerte vorgeschrieben sind, zu hoch sein.

Aus der Druckschrift mit der Veröffentlichungsnummer US 2002/0105287 A1 ist eine Schaltungsanordnung eines Scanners bekannt, mit der Sollwerte der Ströme durch mehrere Leuchtdioden während des Betriebs des Scanners einstellbar sind. Zum Einstellen der Sollwerte für die Ströme ist eine Spannungsquelle ("band gap voltage" 119, Fig. 1 der Druckschrift) einstellbar. Die gewünschten Sollwerte können dann in je einen elektronischen Speicher ("current control register" 116, Fig. 1 und Absatz 25 der Druckschrift) gespeichert werden. Die Schaltungsanordnung ist insgesamt sehr aufwändig gestaltet und enthält neben einem Operationsverstärker und einem Transistor eine Reihe von aktiven Bauelementen, insbesondere von aufwändigen Mikrochips. Die Schaltungsanordnung ist daher teuer in der Herstellung.

Der Erfindung liegt daher die Aufgabe zugrunde, eine Leuchte mit einer abgleichbaren Schaltungsanordnung zum Ansteuern von Leuchtdioden und ein Verfahren zum Abgleichen einer solchen Schaltungsanordnung vorzuschlagen, welches den genannten Nachteil des Standes der Technik abhilft. Insbesondere soll die Schaltung zum Ansteuern der Leuchtdioden für einen möglichst konstanten Strom zur Versorgung der Leuchtdioden sorgen und somit einen konstanten Lichtstrom der Leuchtdioden gewährleisten. Ferner soll ein Verfahren vorgeschlagen werden, mit welchem eine lösungsgemäße Schaltung auf bestimmte Leuchtdioden zum Erzeugen eines bestimmten Lichtstroms abgeglichen werden kann.

Diese Aufgabe wird zunächst erfindungsgemäß mit einer Leuchte gemäß Anspruch 1 gelöst. Eine derartige Leuchte weist Mittel zum Speichern des Sollwerts auf, die zumindest ein erstes Widerstandselement umfassen. Zumindest der Widerstand des ersten Widerstandselement gibt den Mitteln zum Regeln des Stromes den Sollwert des einzustellenden Stroms durch die Leuchtdioden an, um den gewünschten Lichtstrom zu erhalten.

Die Mittel zum Regeln des Stromes umfassen vorteilhaft einen Transistor. Gemäß der Erfindung kann der Ausgang des Operationsverstärkers mit Basis des Transistors verbunden sein. Vorteilhaft ist dann am Kollektor des Transistors der Strom zum Ansteuern der Leuchtdiode abgreifbar. Am Emitter des Transistors kann eine externe Versorgungsspannung angelegt werden. Bei dem Transistor kann es sich im übrigen um einen NPN- oder um einen PNP-Bipolartransistor handeln.

An einem ersten Eingang der beiden Eingänge des Operationsverstärkers kann gemäß der Erfindung eine Referenzspannung anliegen. Der zweite Eingang ist vorteilhaft zumindest mittelbar mit den Leuchtdioden verbunden, wobei mittelbar insbesondere heißt, dass die Verbindung unter Zwischenschaltung eines zweiten Widerstandselements erfolgen kann.

Gemäß einer ersten Ausführungsform der Erfindung kann der zweite Eingang des Operationsverstärkers ferner mit dem Widerstandselement verbunden sein, über welches dann im eingeschwungenen Zustand die Referenzspannung abfällt. Da die Referenzspannung und der Widerstand des ersten Widerstandselement gegebene Größen sind, ist so der Strom durch das Widerstandselement bestimmt, von welchem der Strom durch die Leuchtdioden abhängt oder welcher mit dem Strom durch die Leuchtdioden identisch ist. Das erste Widerstandselement kann dabei mit dem zweiten Widerstandselement in einem Spannungsteiler verschaltet sein, dessen Sternpunkt mit dem zweiten Eingang des Operationsverstärkers verbunden ist.

Ebenso ist es nach einer zweiten Ausführungsform möglich, dass ein erster Eingang der beiden Eingänge des Operationsverstärkers mit dem ersten Widerstandselement verbunden ist. Das erste Widerstandselement bildet dann vorteilhaft einen Widerstand in einem Spannungsteiler mit einem zweiten Widerstandselement, dessen Sternpunkt mit dem ersten Eingang des Operationsverstärkers verbunden ist, so dass dann über das erste Widerstandselement die Referenzspannung abfällt. Durch eine geeignete Wahl des Widerstands des ersten und/oder zweiten Widerstandselements kann die Referenzspannung gewählt werden, welche im eingeschwungenen Zustand der Schaltungsanordnung auch am zweiten Eingang des Operationsverstärkers anliegt und so den Strom durch eine angeschlossene Leuchtdiodenanordnung vorgibt.

Bei dem ersten Eingang kann es sich dabei um den nicht-invertierenden oder um den invertierenden Eingang handeln. Sofern als erster Eingang der invertierende Eingang vorgesehen ist, handelt es sich bei dem Transistor vorteilhaft um einen PNP Transistor, welcher beim Anliegen eines Low Signals an der Basis durchschaltet.

Die Spannungsteiler können auf verschiedene Art und Weise hergestellt werden. Zum Einen ist es möglich als Spannungsteiler ein Potentiometer vorzusehen dessen Schleiferabgriff den Sternpunkt des Spannungsteilers bildet. Dabei kann es sich um ein herkömmliches, mechanisches oder aber um ein Digitalpotentiometer handeln, welches ein EEPROM umfasst. Im Grunde kann für den Spannungsteiler eine Kombination aus zwei Widerständen mit konstantem ohmschen Widerstand gewählt werden. Vorteilhaft ist es aber wenn zumindest einer der Widerstände änderbar ist, so dass das Teilungsverhältnis des Spannungsteilers einstellbar ist.

Die Schaltungsanordnung kann vorteilhaft vollständig baulich von den Leuchtdioden getrennt sein, es können jedoch auch einzelne Bauelemente insbesondere Bauelemente des Spannungsteilers an zweiten Eingang des Operationsverstärkers baulich mit den Leuchtdioden zusammengefasst sein, d. h. ein Widerstand des Spannungsteilers kann mit den Leuchtdioden auf einem gemeinsamen Schaltungsträger angeordnet sein.

Zum Abgleichen einer der vorgenannten Schaltungsanordnungen wird ein Verfahren gewählt, welches folgende Schritte umfasst:
1. Die Leuchtdioden werden an die Schaltungsanordnung elektrisch angeschlossen,
2. die Leuchtdioden werden über die Schaltungsanordnung mit einem Strom beaufschlagt,
3. der durch die Leuchtdioden fließende elektrische Strom oder der durch die Leuchtdioden erzeugte Lichtstrom werden gemessen,
4. der Widerstand des Widerstandselements wird verändert, bis der gewünschte elektrische Strom oder der gewünschte Lichtstrom gemessen wird.

Zur Messung des Lichtstroms können dabei verschiedene Verfahren durchgeführt werden. Zum einen kann die Messung des Lichtstroms vor oder nach dem Einbau der Leuchte in einem Leuchtengehäuse mit bzw. ohne eine Abschlussscheibe durchgeführt werden. Der Einfluss der Abschlussscheibe bzw. eine Gehäuseabdeckung können bei dem Abgleichverfahren rechnerisch berücksichtigt werden.

Die Lichtmessung kann ferner mit einem oder mehreren räumlich verteilt angeordneten Lichtsensoren durchgeführt werden, so dass eine Messung der Lichtverteilung, eine Globalmessung oder Punktmessungen an einem Referenzpunkt durchgeführt werden können. Ebenso ist es möglich, dass der Lichtsensor während der Messung an verschiedene Positionen vor den Leuchtdioden zur Messung des erzeugten Lichtstroms verfahren wird.

In eine erfindungsgemäßen Leuchte können mehrere Schaltungsanordnungen mit den zugeordneten Leuchtdioden, Leuchtdiodenvektoren oder Leuchtdiodenmatrizen verschaltet werden, wobei der Abgleich für jede Schaltungsanordnung mit den zugeordneten Leuchtdioden durchgeführt werden kann oder ein gemeinsamer Abgleich für alle Schaltungsanordnungen mit den ihnen zugeordneten Leuchtdioden erfolgen kann.

Fünf Ausführungsbeispiele einer erfindungsgemäßen Leuchte werden anhand der Zeichnung näher beschrieben. Darin zeigt
- Fig. 1: eine Leuchte mit Leuchtdioden die ein Digitalpotentiometer umfasst,
- Fig. 2: eine zweite Leuchte mit Leuchtdioden, die einen Mikrokontroller umfasst,
- Fig. 3: eine dritte Leuchte mit Leuchtdioden, die mit einem Laserstrahl einstellbare Widerstände umfasst,
- Fig. 4: eine vierte Leuchte mit Leuchtdioden, welche einen baulich getrennten Kodierwiderstand umfasst und
- Fig. 5: eine fünfte Leuchte mit Leuchtdioden, die abtrennbare Widerstände umfasst.

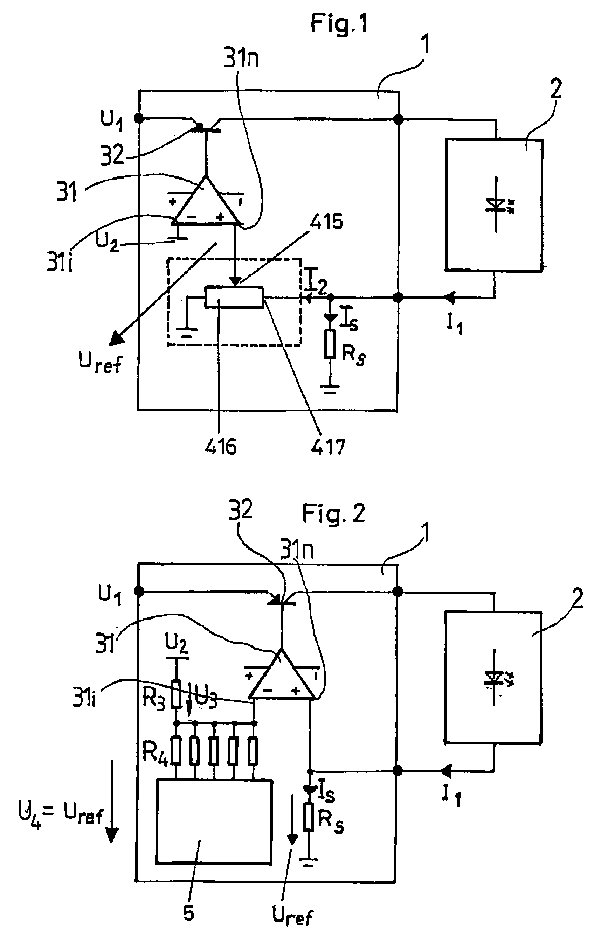

Den in den Figuren 1 bis 5 dargestellten Leuchten 1 ist gemeinsam, dass sie Mittel 3 zum Regeln des Stroms durch Leuchtdioden 2 umfassen. Bei den Leuchtdioden 2 handelt es sich, ohne dass dies näher dargestellt ist, um eine Leuchtdiodenmatrix aus parallel geschalteten Leuchtdiodenvektoren in Serie geschalteter Leuchtdioden.

Die Mittel 3 zum Regeln des Stroms durch die Leuchtdioden 2 weisen einen Operationsverstärker 31 und einen Transistor 32 auf. An den Emitter 31a des Transistors wird eine äußere Spannung U₁ angelegt. Die Basis 31b des Transistors, bei dem es sich um einen PNP-Bipolartransistor handelt, ist an den Ausgang des Operationsverstärkers 31 angeschlossen. Der Kollektor 32c des Transistors 32 ist mit den Leuchtdioden 2 verbunden. Die Leuchtdioden 2 sind ferner über einen Widerstand R_{S} mit Masse verbunden.

Als Mittel 4 zum Speichern des Sollwerts des elektrischen Stroms durch die Leuchtdioden 2 sind in den Schaltungsanordnungen gemäß Fig. 1 bis 5 erste Widerstandselemente vorgesehen, welche auf unterschiedliche Weise mit den übrigen Komponenten der Schaltungsanordnung 1 bzw. den Leuchtdioden 2 verschaltet ist.

Bei den in den Fig. 1 und 3 bis 5 sind Schaltungsanordnungen gewählt, welche der ersten Ausführungsform der erfindungsgemäßen Leuchte entsprechen. Bei diesen Schaltungsanordnungen ist das erste, einstellbare Widerstandselement Teil eines Spannungsteilers R₁, R₂, welcher zwischen den Leuchtdioden 2 und der Masse geschaltet ist. Damit liegt der Spannungsteiler parallel zum Widerstand R_{S}. Der nichtinvertierende Eingang 31n des Operationsverstärkers 31 greift an dem Sternpunkt dieses Spannungsteilers R₁, R_{S} ein. Der Widerstand R₁ des Spannungsteilers R₁, R₂ bildet in dem Spannungspfad vom nichtinvertierenden Eingang 31n zur Masse mit dem Widerstand R_{S} ebenfalls einen Spannungsteiler R₁, R_{S}.

Die Spannung zwischen dem nichtinvertierenden Eingang 31n und Masse entspricht im eingeschwungenen Zustand der Schaltungsanordnungen immer der Referenzspannung U_{ref}. Diese Spannung U_{ref} fällt bei den Schaltungsanordnungen immer vollständig über R₂ und über dem Spannungsteiler R₁, R_{S} ab. Die sich an den Widerständen R₁ und R_{S} einstellenden Teilspannungen entsprechen dabei dem Verhältnis der Widerstände R₁, R_{S}. Die Teilspannungen über R₁ und R_{S} sind daher abhängig von den R₁ und R_{S} sowie der Referenzspannung U_{ref}. Da der Zusammenhang zwischen den Widerständen R₁, R₂, R_{S} und den Teilspannungen über den Widerständen R₁, R₂ und R_{S} bekannt ist, ist auch der Zusammenhang zwischen den Strömen durch die einzelnen Widerstände R₁, R₂, R_{S} bekannt. Der Strom durch die Widerstände R₁ und R₂ ist gleich, da in den Operationsverstärker über den nicht-invertierenden Eingang kein Strom eintritt oder heraustritt. Die Summe der Ströme durch die Widerstände R₁ und R_{S} entspricht dem Strom I₁ durch die Leuchtdioden 2. D. h. im Umkehrschluss der Strom I₁ durch die Leuchtdioden 2 ist abhängig von den Strömen durch den Widerstand R_{S} und diese sind abhängig von den Widerständen R₁ und R₂. Sofern der Strom durch die Widerstände R₁ oder R₂ durch Verändern der Widerstandswerte der Widerstände R₁ und R₂ verändert wird, ändert sich also auch der Strom I₁ durch die Leuchtdioden 2. Durch ein Verändern der Widerstände R₁ und/oder R₂ lässt sich somit der Strom ₁ durch die Leuchtdioden 2 einstellen.

Zu den Schaltungsanordnungen gemäß der Figuren 1, 3, 4 und 5 nun im einzelnen:

Im Weiteren wird zunächst auf Fig. 1 Bezug genommen. Der nicht invertierende Eingang 31 n des Operationsverstärkers 31 ist ferner mit dem Schleifer 415 eines Digitalpotentiometers 41 verbunden, welches den Spannungsteiler R₁, R₂ bildet. Die übrigen Eingänge des Digitalpotentiometers 41 liegen auf Masse bzw. am Ausgang der Leuchtdioden 2 an. Der masseseitige Abschnitt 416 des Digitalpotentiometers 41 und der leuchtdiodenseitige Abschnitt 417 des Digitalpotentiometers 41 bilden die Widerstände R₁, R₂ des Spannungsteilers, welcher mit dem Widerstand R_{S} den Sollwert des Stroms I₁ durch die Leuchtdioden 2 vorgibt. Die Sollwertvorgabe wird durch die Wahl des zwischen dem nicht-invertierenden Eingang und Masse geschalteten Gesamtwiderstands bei im eingeschwungenen Zustand gegebener Spannung, nämlich der Referenzspannung U_{ref} erreicht. Der Strom I₁ durch die Leuchtdioden 2 entspricht der Summe des Stroms I₂ durch das Digitalpotentiometer 41 und des Stroms I_{S} durch den Widerstand R_{S}. Bei gegebener Spannung lässt sich durch die Wahl des Widerstands zwischen nicht-invertierenden Eingang und Masse der Strom I₂ durch das Digitalpotentiometer einstellen. Ebenso lässt sich bei der gegebenen Spannung am nicht-invertierenden Eingang der Strom I_{S} durch den Widerstand R_{S} bestimmen. Aus der Summe der Strome I_{S}, I_{P} ergibt sich der Strom durch die Leuchtdioden 2, welcher somit von der Wahl der Einstellung des Digitalpotentiometers 41 abhängt.

Beim Einschalten der Schaltung gemäß Fig. 1 erfolgt Folgendes. Der Strom I₁ durch die Leuchtdioden 1 ist zunächst kleiner als der Sollwert. Die Spannungsdifferenz zwischen nicht-invertierenden Eingang 31n und invertierenden Eingang 31 des Operationsverstärkers ist daher kleiner null und bewirkt daher eine negative Spannung am Ausgang des Operationsverstärkers 31 und somit an der Basis 32b des Transistors 32. Da es sich um einen PNP Transistor handelt, schaltet der Transistor 32 vom Emitter 32a zum Kollektor 32c durch. Die am Kollektor 32c angeschlossenen Leuchtdioden 2 werden somit mit dem Strom I₁ versorgt, welcher über den Widerstand R_{S} sowie über das Digitalpotentiometer 41 nach Masse abgeführt wird. Ist der Transistor 32 erstmal im Pfad vom Emitter 32e zum Kollektor 32c durchgeschaltet, versucht der Operationsverstärker 31 weiter die Spannung zwischen dem invertierenden Eingang 31 i und dem nicht-invertierenden Eingang 31 n auszugleichen. Das heißt, dass der nichtinvertierende Eingang 31n auf das Potential der Referenzspannung U_{ref} eingestellt wird. Dazu wird es erforderlich, dass die Referenzspannung U_{ref} über den masseseitigen Abschnitt 416 des Digitalpotentiometers abfällt. Damit dort die gewünschte Spannung abfallen kann, muss der aus den Leuchtdioden 2 austretende Strom I₁ eine dem Widerstand des Abschnitts 416 des Digitalpotentiometers und der Referenzspannung U_{ref} entsprechende Stromstärke haben. Diese Stromstärke entspricht dem Sollwert des Stromes I₁ durch die Leuchtdioden 2 für den durch die Leuchtdioden 2zu erzeugenden Lichtstroms.

Durch ein Verändern der Einstellung des Digitalpotentiometers 41 kann für den eingeschwungenen Zustand bei gegebener Referenzspannung U_{ref} die Stromstärke, d. h. der Sollwert durch die Leuchtdiode 2 fließenden Stroms I₁ geändert werden.

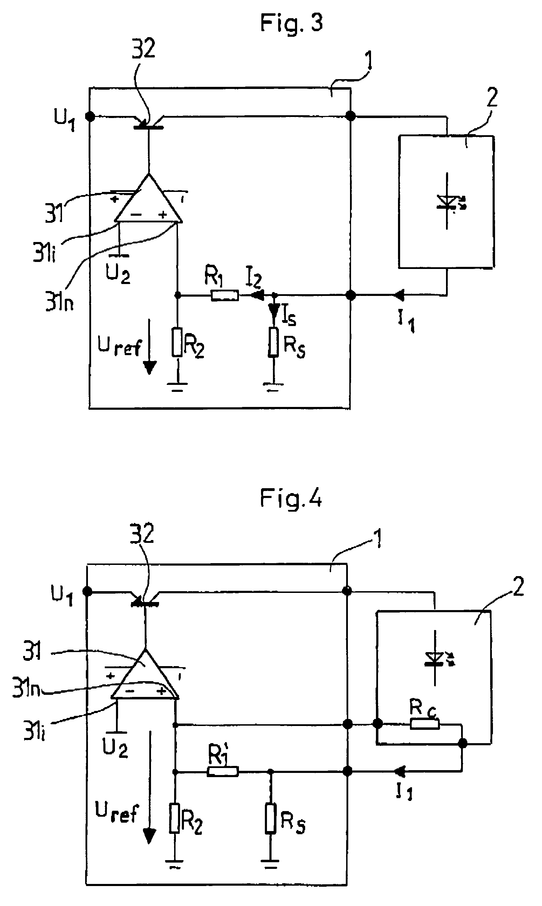

Die in den Fig. 3 bis 5 dargestellten Leuchten gemäß dem ersten Ausführungsbeispiel unterscheiden sich von der in Fig. 1 dargestellten Leuchte lediglich durch die Ausführung des Spannungsteilers R₁, R₂ durch welchen der Strom I₂ fließt. Ist dieser Spannungsteiler R₁, R₂ in Fig. 1 durch ein Potentiometer 41 realisiert handelt es sich im Gegensatz dazu bei den bei der Leuchte gemäß Fig. 3 gewählten Widerstandselementen um lasertrimmbare Widerstände. Diese lasertrimmaren Widerstände R₁ R₂ können mittels eines Laserstrahls auf bekannte Art und Weise eingestellt werden, um so die Leuchte an den gewünschten Lichtstrom anzupassen.

Bei der Leuchte gemäß Fig. 4 ist der Widerstand R₂ des Spannungsteilers R₁, R₂ als herkömmlicher ohmscher Widerstand ausgeführt. Der Widerstand R₁ wird dagegen aus einer Parallelschaltung des Widerstands R_{C} und des Widerstands R₁ gebildet. Dabei ist der Widerstand R_{C} nicht auf dem gleichen Schaltungsträger wie die übrigen Bauelemente der Schaltungsanordnung 1 angebracht, sondern vielmehr auf einem Schaltungsträger der Leuchtendioden 2. Während der Widerstand R₁ wie auch der Widerstand R₂ ein herkömmlicher ohmscher Widerstand sind, kann es sich bei dem Widerstand R_{C} um einen einstellbaren, einen auswechselbaren oder um einen fest installierten aber besonders ausgewählten Widerstand handeln. Der Widerstandswert des Widerstands R_{C} wird so gewählt das der gewünschte Lichtstrom durch die Leuchtdioden 2 erzeugt wird.

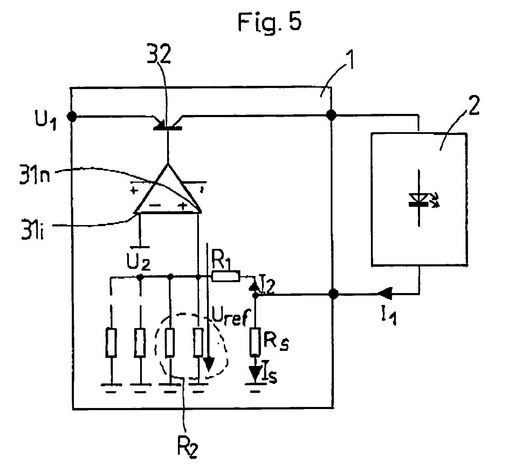

Bei der in Fig. 5 dargestellten Leuchte ist der Widerstand R₁ des Spannungsteilers R₁, R₂ als herkömmlicher ohmscher Widerstand ausgeführt. Dagegen besteht der Widerstand R₂ aus einer Parallelschaltung von mehreren Widerständen. Zum Abgleichen der Schaltungsanordnung, d. h. zum Einstellen des Stroms I₁ durch die Leuchtdioden I₂ für den gewünschten Lichtstrom werden die Verbindungen von einzelnen Widerständen zum nicht-invertierenden Eingang 31n des Operationsverstärkers 31 unterbrochen. Dadurch wird der Widerstand R_{2,} welcher sich aus dem Gesamtwiderstand der parallel geschalteten Widerstände ergibt, vergrößert. Der Strom I₁ durch die Leuchtdioden I₂ kann so verringert werden.

Die in Fig. 2 dargestellte Schaltungsanordnung entspricht der Schaltungsanordnung gemäß der zweiten Ausführungsform der Erfindung. Bei dieser in Fig. 2 dargestellten Schaltungsanordnung wird daher der Strom durch die Leuchtdioden 2 durch ein Ändern der am invertierenden Eingang 31 i des Operationsverstärkers anliegenden Referenzspannung U_{ref} geändert. Dazu ist der invertierende Eingang 31 i des Operationsverstärkers 31 mit dem Sternpunkt eines Spannungsteilers aus den Widerständen R₃ und R₄ verbunden. Der Widerstand R₃ liegt mit seinem anderen Anschluss an der Versorgungsspannung U₂ an während der Widerstand R₄ mit seinem anderen Anschluss auf Massepotential liegt. Das Verhältnis der beiden Widerstände R₃ und R₄ bestimmt das Spannungsverhältnis der Spannungen U₃ und U₄ über den Widerständen R₃, R₄. Dabei bildet die über dem Widerstand R₄ abfallende Spannung U₄ die Referenzspannung U_{ref} der Schaltungsanordnung. Im eingeschwungenen Zustand wird diese Referenzspannung U_{ref} an dem nicht-invertierenden Eingang 31n des Operationsverstärkers 31 eingestellt. Dieser nicht-invertierende Eingang 31n des Operationsverstärkers ist einerseits über den Widerstand R_{S} mit Massepotential verbunden, andererseits besteht eine Verbindung zwischen dem nicht-invertierenden Eingang 31n und den Leuchtdioden 2. Die sich im eingeschwungenen am nicht-invertierenden Eingang 31n einstellende Referenzspannung U_{ref} fällt daher über dem Widerstand R_{S} ab. Aufgrund des ohmschen Gesetzes ergibt sich aus dem Wert des Widerstands R_{S} und der Referenzspannung U_{ref} der Strom durch den Widerstand R_{S}. Dieser Strom I₁ fließt ebenfalls durch die Leuchtdioden 2. Durch ein Verändern der Referenzspannung U_{ref} lässt sich somit der Strom I₁ durch die Leuchtdioden 2 ändern. Ein Ändern der Referenzspannung U_{ref} wird durch ein Ändern des Teilungsverhältnisses in dem Spannungsteiler aus den Widerständen R3 und R4 bewirkt. Dazu genügt es wenn einer der beiden Widerstände R₃, R₄ veränderbar ist. Im vorliegenden Fall der Schaltung gemäß Fig. 2 ist der Widerstand R₄ veränderbar. Bei dem Widerstand R₄ handelt es sich nämlich um eine Verschaltung von mehreren parallelen Widerständen mit einem Mikrokontroller und einem EEPROM Speicher. Der Mikrokontroller bewirkt ein Ein- oder Ausschalten der Widerstände zum Massepotential, so dass entsprechend der Programmierung des Mikrokontrollers und dem Ablegen der Programmierung in dem Speicher der Wert des Widerstands R₄ geändert werden kann.

In den Ausführungsbeispielen werden verschiedene Möglichkeiten für einstellbare Widerstandselemente gezeigt, die in den einzelnen Spannungsteilern eingesetzt werden. Es bleibt darauf hinzuweisen, dass verschiedene derartige einstellbare Widerstände auch in einem Spannungsteiler kombiniert werden können. Ebenso ist es möglich die verschiedenen einstellbaren Widerstände mit herkömmlichen ohmschen Widerständen zu kombinieren.

## Patentansprüche

1. Leuchte mit einer abgleichbaren Schaltungsanordnung (1) zum Ansteuern von Leuchtdioden (2) mit einem elektrischen Strom umfassend folgende Merkmale:
- die Schaltungsanordnung (1) weist Mittel (31, 32) zum Regeln des elektrischen Stroms auf;
- die Mittel zum Regeln des elektrischen Stroms umfassen einen Operationsverstärker (31) und einen Transistor (32);
- die Schaltungsanordnung (1) weist Mittel zum Speichern eines Sollwerts des Stroms auf;
**dadurch gekennzeichnet, dass**
- die Mittel zum Speichern des Sollwerts zumindest ein Widerstandselement umfassen;
- das Widerstandselement mit einem ersten der beiden Eingänge des Operationsverstärkers und mit Masse verbunden ist;
- der Widerstand des Widerstandselements zum Abgleichen veränderbar ist.

2. Leuchte nach Anspruch 1, **dadurch gekennzeichnet, dass** der Ausgang des Operationsverstärkers (31) mit der Basis (32b) des Transistors (32) verbunden ist.

3. Leuchte nach Anspruch 2, **dadurch gekennzeichnet, dass** am Kollektor (32c) des Transistors (32) der Strom zum Ansteuern der Leuchtdioden (2) abgreifbar ist.

4. Leuchte nach einem der Ansprüche 2 oder 3, **dadurch gekennzeichnet, dass** an einem ersten Eingang (31i) des Operationsverstärkers (31) eine Referenzspannung anliegt.

5. Leuchte nach Anspruch 4, **dadurch gekennzeichnet, dass** der zweite Eingang (31 n) des Operationsverstärkers (31) mit dem Widerstandselement verbunden ist.

6. Leuchte nach einem der Ansprüche 2 bis 4, **dadurch gekennzeichnet, dass** ein erster Eingang (31i) des Operationsverstärkers (31) mit dem Widerstandselement verbunden ist über welches eine Referenzspannung abfällt.

7. Leuchte nach Anspruch 6, **dadurch gekennzeichnet, dass** das Widerstandselement einen Widerstand in einem Spannungsteiler bildet und der erste Eingang an dem Sternpunkt des Spannungsteilers angeschlossen ist.

8. Verfahren zum Abgleichen einer Schaltungsanordnung (1) nach einem der vorhergehenden Ansprüche umfassend folgende Schritte:
1. die Leuchtdioden (2) werden an die Schaltungsanordnung (1) angeschlossen,
2. die Leuchtdioden (2) werden über die Schaltungsanordnung (1) mit einem Strom beaufschlagt,
3. der durch die Leuchtdioden (2) fließende elektrische Strom oder der durch die Leuchtdioden erzeugte Lichtstrom werden gemessen,
4. der Widerstand des Widerstandselements wird verändert, bis der gewünschte Lichtstrom gemessen wird

## Claims

1. A lamp with an adjustable switching arrangement (1) for controlling light-emitting diodes (2) with an electric current, involving the following features:
- the switching arrangement (1) includes means (31, 32) for regulating the electric current;
- the means for regulating the electric current comprise an operational amplifier (31) and a transistor (32);
- the switching arrangement (1) includes means for storing a desired value of the current;
**characterized in that**
- the means for storing the desired value comprise at least one resistance element;
- the resistance element is connected to a first one of the two inputs of the operational amplifier and to earth;
- the resistance of the resistance element can be varied for the adjustment.

2. A lamp according to Claim 1, **characterized in that** the output of the operational amplifier (31) is connected to the base (32b) of the transistor (32).

3. A lamp according to Claim 2, **characterized in that** the current for controlling the light-emitting diodes (2) can be tapped at the collector (32c) of the transistor (32).

4. A lamp according to one of Claims 2 or 3, **characterized in that** a reference voltage is applied to a first input (31i) of the operational amplifier (31).

5. A lamp according to Claim 4, **characterized in that** the second input (31n) of the operational amplifier (31) is connected to the resistance element.

6. A lamp according to one of Claims 2 to 4, **characterized in that** a first input (31 i) of the operational amplifier (31) is connected to the resistance element across which a reference voltage drops.

7. A lamp according to Claim 6, **characterized in that** the resistance element forms a resistance in a voltage divider and the first input is connected to the star point of the voltage divider.

8. A method of adjusting a switching arrangement (1) according to one of the preceding claims, involving the following steps:
1. the light-emitting diodes (2) are connected to the switching arrangement (1),
2. current is applied to the light-emitting diodes (2) via the switching arrangement (1),
3. the electric current flowing through the light-emitting diodes (2) or the lighting current produced by the light-emitting diodes is measured,
4. the resistance of the resistance element is varied until the desired lighting current is measured.

## Revendications

1. Lampe équipée d'un circuit de réglage (1) pour commander des diodes électroluminescentes (2) par un courant électrique comprenant les caractéristiques suivantes :
- le circuit (1) présente des moyens (31, 32) pour régler le courant électrique ;
- les moyens pour régler le courant électrique comprennent un amplificateur optique (31) et un transistor (32) ;
- le circuit (1) présente des moyens pour mémoriser une valeur de consigne du courant ;
**caractérisée en ce que**
- les moyens pour mémoriser la valeur de consigne comprennent au moins un élément de résistance ;
- l'élément de résistance est relié à une première des deux entrées de l'amplificateur opérationnel et à la masse ; la résistance de l'élément de résistance peut être modifiée pour le réglage.

2. Lampe selon la revendication 1, **caractérisée en ce que** la sortie de l'amplificateur opérationnel (31) est reliée à la base (32b) du transistor (32).

3. Lampe selon la revendication 2, **caractérisée en ce que** le courant pour commander les diodes électroluminescentes (2) peut être prélevé au collecteur (32c) du transistor (32).

4. Lampe selon l'une des revendications 2 ou 3, **caractérisée en ce qu'**une tension de référence existe à une première entrée (31i) de l'amplificateur opérationnel (31).

5. Lampe selon la revendication 4, **caractérisée en ce que** la seconde entrée (31n) de l'amplificateur opérationnel (31) est reliée à l'élément de résistance.

6. Lampe selon l'une des revendications 2 à 4, **caractérisée en ce qu'**une première entrée (31i) de l'amplificateur opérationnel (31) est reliée à l'élément de résistance, par l'intermédiaire duquel une tension de référence chute.

7. Lampe selon la revendication 6, **caractérisée en ce que** l'élément de résistance forme une résistance dans un diviseur de tension et la première entrée est reliée au point neutre du diviseur de tension.

8. Procédé de réglage d'un circuit (1) selon l'une des revendications précédentes comprenant les étapes suivantes:
1. Les diodes électroluminescentes (2) sont reliées au circuit (1),
2. Les diodes électroluminescentes (2) sont alimentées par un courant par l'intermédiaire du circuit (1),
3. Le courant électrique circulant à travers les diodes électroluminescentes (2) ou le courant lumineux généré par les diodes électroluminescentes sont mesurés,
4. La résistance de l'élément de résistance est modifiée, jusqu'à ce que le courant lumineux désiré soit mesuré.
